# EUROPÄISCHE PATENTSCHRIFT

(11) **EP 1 371 104 B1**
(45) Veröffentlichungstag und Bekanntmachung des Hinweises auf die Patenterteilung: **02.11.2005**
(21) Anmeldenummer: 02722169.6
(22) Anmeldetag: 02.03.2002
(51) Int. Cl.: H01M 8/02, H01M 8/24, H01M 8/04

(54) **BRENNSTOFFZELLE MIT INTEGRIERTEM WÄRMETAUSCHER**
FUEL CELL WITH INTEGRATED HEAT EXCHANGER
PILE A COMBUSTIBLE EQUIPEE D'UN ECHANGEUR THERMIQUE INTEGRE

(30) Priorität: 17.03.2001 DE 10113002
(43) Veröffentlichungstag der Anmeldung: 17.12.2003
(73) Patentinhaber: Bayerische Motoren Werke Aktiengesellschaft, 80809 München (DE)
(72) Erfinder: WETZEL, Franz-Josef, 82216 Gernlinden (DE); TACHTLER, Joachim, 85737 Ismaning (DE)
(86) Internationale Anmeldenummer: PCT/EP2002/002276
(87) Internationale Veröffentlichungsnummer: WO 2002/075833

(56) Entgegenhaltungen:
- EP-A- 1 075 033
- US-A- 5 919 584
- PATENT ABSTRACTS OF JAPAN vol. 010, no. 347 (E-457), 21. November 1986 (1986-11-21) & JP 61 148768 A (TOSHIBA CORP), 7. Juli 1986 (1986-07-07)
- PATENT ABSTRACTS OF JAPAN vol. 011, no. 023 (E-473), 22. Januar 1987 (1987-01-22) & JP 61 193370 A (SANYO ELECTRIC CO LTD), 27. August 1986 (1986-08-27)
- PATENT ABSTRACTS OF JAPAN vol. 012, no. 320 (E-651), 30. August 1988 (1988-08-30) & JP 63 086270 A (HITACHI LTD), 16. April 1988 (1988-04-16)
- PATENT ABSTRACTS OF JAPAN vol. 013, no. 114 (E-730), 20. März 1989 (1989-03-20) & JP 63 285873 A (ISHIKAWAJIMA HARIMA HEAVY IND CO LTD), 22. November 1988 (1988-11-22)
- PATENT ABSTRACTS OF JAPAN vol. 011, no. 077 (E-487), 7. März 1987 (1987-03-07) & JP 61 233978 A (FUJI ELECTRIC CO LTD), 18. Oktober 1986 (1986-10-18)
- PATENT ABSTRACTS OF JAPAN vol. 009, no. 204 (E-337), 21. August 1985 (1985-08-21) & JP 60 068562 A (MITSUBISHI DENKI KK), 19. April 1985 (1985-04-19)

## Beschreibung

Die Erfindung betrifft eine Brennstoffzelle gemäß dem Oberbegriff des Anspruchs 1.

Bei Brennstoffzellen, insbesondere Hochtemperatur-Brennstoffzellen (z.B. SOFC-Brennstoffzellen) ist es bekannt, das kathodenseitige Reaktandengas (z.B. die Reaktionsluft) vorzuwärmen, um sie auf die erforderliche Reaktionstemperatur zu bringen. Dies wird herkömmlicherweise in einem separaten Hochtemperatur-Wärmetauscher durchgeführt. Ein solcher Wärmetauscher ist jedoch voluminös, schwer und teuer. Außerdem erfordert ein solcher Wärmetauscher eine aufwendige Verrohrung sowie eine kostenintensive Regelungs- und Steuerungstechnik. Einfacher sind demgegenüber in die sog. Interkonnektoren, d.h. End- oder Zwischenplatten eines Brennstoffzellen-Stapels integrierte Wärmetauscher, wie dies beispielsweise aus der EP-A-1 075 033 bekannt ist.

Eine gegenüber diesem bekannten Stand der Technik hinsichtlich des Wärmetausch-Wirkungsgrades verbesserte und im Wärmetauscherabschnitt hinsichtlich des Aufbaus einfache Brennstoffzelle aufzuzeigen, ist Aufgabe der vorliegenden Erfindung.
Diese Aufgabe wird durch die im Anspruch 1 genannten Merkmale gelöst.

Demgemäss ist eine End- oder Zwischenplatte, die an oder zwischen den verschiedenen Elektrolyt-Elektroden-Einheiten (Einzelzelle) angeordnet ist, derart ausgebildet, dass strömungsmäßig vor einem Zufuhrbereich, insbesondere einem kathodenseitigen Zufuhrbereich, ein Wärmetauscherbereich ausgebildet ist, in dem einer Anodenseite Wärme entzogen und dadurch der gasförmige Reaktand (z.B. Luft) auf die erforderliche Reaktionstemperatur aufgewärmt wird.

Es ist somit beispielsweise in einer bipolaren Platte ein Wärmetauscher integriert und es wird das zu erwärmende Reaktandengas (z.B. die Luft) an der heißen Anodenseite entlang geführt. Erst nachdem dieser als Wärmetauscher wirkende Bereich durchströmt ist, wird der gasförmige Reaktand der zugehörigen Elektrode (z.B. Kathode) zur Stromerzeugung zugeführt.

Die End- oder Zwischenplatte ist so ausgeführt, dass eine Umkehr der Strömungsrichtung des Reaktandengases erreicht wird. So kann das Reaktandengas serpentinenartig durch den Wärmetauscher geführt werden, um so eine noch bessere Wärmeübertragung im Wärmetauscher zu ermöglichen. Hierfür ist innerhalb der End- oder Zwischenplatte eine Umlenkplatte vorgesehen, womit ohne weiteres eine serpentinenartig durchgeführte Strömung herbeigeführt werden kann, derart, dass die Strömungsrichtung der gasförmigen Reaktanden in den durch die Umlenkplatte gebildeten Teilabschnitten der End- oder Zwischenplatte gegensinnig zueinander ist.

Überdies enthält die End- oder Zwischenplatte (z.B. Bipolar-Platte) vorzugsweise drei Strömungsbereiche und zwar einen Anodenströmungsabschnitt zwischen der End- oder Zwischenplatte und einer benachbarten Anode einer Einzelzelle, einen Rückströmungs-Wärmetauscherabschnitt benachbart des Anodenströmungsabschnittes und einen Kathodenströmungsabschnitt zwischen der End- oder Zwischenplatte und einer Kathode einer anderen Einzelzelle.

Dabei ist die End- oder Zwischenplatte aus zumindest zwei zusammenzufügenden separaten Teilelementen aufgebaut, wobei zwischen den beiden Teilelementen zumindest ein Teil des Wärmetauscherabschnittes gebildet ist und der Wärmetauscherabschnitt strömungsmäßig mit dem später den Kathodenabschnitt bildenden Bereich verbunden ist.

Um die einzelnen Strömungsbereiche konstruktiv auszubilden, können auf den einzelnen Seiten der End- oder Zwischenplatten sowie zwischen den Teilelementen Abstandselemente, beispielsweise in Form von Noppen, vorgesehen werden, die dann entweder gegeneinander oder gegen die einzelnen Einzelzellen zur Anlage gelangen. Die Noppen können durch Einprägen oder Aufbringen hergestellt werden und in ihrer Form je nach den Bedürfnissen ausgestaltet sein.

Eine einfache Ausführungsform der vorliegenden Erfindung ist nachfolgend und mit Bezug auf die einzige beiliegende Figur näher beschrieben.

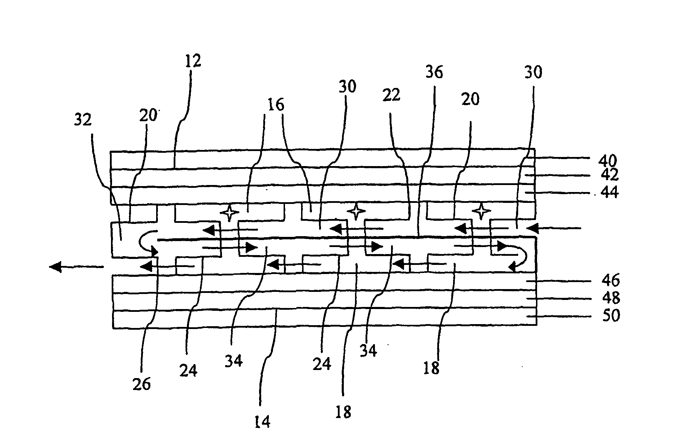

Die einzige Figur zeigt einen stark schematisierten Teilausschnitt aus einer Brennstoffzelle mit einer ersten Einzelzelle 12, bestehend aus Kathode 40, Elektrolyt 42 und Anode 44, und einer zweiten Einzelzelle 14, bestehend aus Kathode 46, Elektrolyt 48 und Anode 50. Beide Einzelzellen stellen eine nicht näher beschriebene keramische Elektrolyt-Elektroden-Einheit dar, zwischen denen eine Zwischenplatte, hier eine Bipolar-Platte, angeordnet ist. Die Bipolar-Platte dient einerseits zum Einbringen der verschiedenen gasförmigen Reaktanden an die jeweiligen Elektrodenseiten (Anode 44, Kathode 46) der jeweiligen Einzelzellen 12, 14 sowie zur Herstellung einer elektrischen Leitfähigkeit.

Die Bipolar-Platte ist vorliegend zweiteilig ausgebildet und zwar aus einer ersten Noppenplatte 20 und einer zweiten Noppenplatte 24, die im wesentlichen gegenüber der Symmetrielinie der vorliegenden Zeichnung spiegelbildlich ausgestaltet ist.

Jede der Noppenplatte 20 und 24 umfasst eine Platte an deren unteren und oberen Oberflächen jeweils eine Vielzahl von Noppen (Bezugsziffem 22 und 26) ausgebildet sind. Mit diesen Noppen 22, 26 wird einerseits ein Abstand zu den Elektroden (Anode, Kathode) der verschiedenen Einzelzellen 12 und 14 andererseits ein Abstand zwischen den beiden Noppenplatten 20 und 24 selbst hergestellt.

Durch die Ausbildung der Noppen; die vorliegend durch Einprägung in die Platten entstanden sind, entstehen verschiedene Strömungsbereiche in den damit ausgebildeten Freiräumen und zwar zum einen anodenseitig ein erster Strömungsbereich 16 zwischen der Noppenplatte 22 und der Anode der Einzelzelle 12, in dem ein gasförmiger Reaktand, beispielsweise H₂, Erdgas oder Benzin-/Dieselreformat, eingebracht wird. Vorliegend ist dies schematisch durch die vierzackigen Steme in dem Anodenströmungsraum 16 dargestellt. Dabei erfolgt die Durchströmung mit dem gasförmigen Reaktanden in die Bildebene hinein, also senkrecht zum Bild.

Zwischen den beiden Noppenplatten 20 und 24 der Bipolarplatte ist ein Umlenkblech 36 angeordnet, das die zwischen den beiden Noppenplatten 20 und 24 gebildeten Strömungsräume einerseits voneinander abtrennt und andererseits einen Umlenkbereich 32 schafft, in dem die Strömungsrichtung des zweiten gasförmigen Reaktanden - hier Luft - umgekehrt wird. Die Luft wird in Pfeilrichtung in die Bipolar-Platte eingeführt und bewegt sich zunächst in dem mittels der Noppen hergestellten Strömungsbereich 30 an der Anode bzw. dem anodenseitigen Strömungsbereich 16 vorbei. Dabei erfolgt eine Wärmeabgabe von der heißen Anodenseite an die zunächst noch auf Raumtemperatur befindliche oder in einer einfachen Anordnung vorgewärmte Luft. Die Luft erwärmt sich somit. Nach dem fast vollständigen Durchströmen über die Länge der Einzelzelle erfolgt am Ende des Umlenkbleches 36 eine Umkehr des Luftstromes, der sodann - ebenfalls in Pfeilrichtung - unterhalb des Umlenkbleches 36 gegensinnig zur oberen Strömungsrichtung die Bipolarplatte nochmals im wesentlichen über ihre Breite durchquert. Dabei wird die Luft wiederum aufgewärmt. Am in der Figur rechten Ende des zweiten Strömungsbereiches 34 erfolgt nochmals eine Umkehr der Strömungsrichtung und zwar hervorgerufen durch einen um 90 Grad umgebogenen Teil des Umlenkbleches 36, so dass die Luft in den Kathodenströmungsraum 18 geführt wird. Hier wird die mittlerweile auf Reaktionstemperatur gebrachte Luft dann der Kathode der Einzelzelle 14 zugeführt und zur Stromerzeugung verwendet.

Mit der vorliegenden Erfindung ist in die Bipolar-Platte somit ein Wärmetauscher eingebaut, der die Wärmetauscherkammem 30 und 34 umfasst. Diese Kammern werden von der Luft durchströmt, bevor der Reaktand dann in den Kathodenströmungsbereich gelangt. Die mit hoher Temperatur betriebene Brennstoffzelle erwärmt die Luft dabei ausreichend auf Reaktionstemperatur, so dass ein separater vorgeschalteter komplexer Wärmetauscher nicht benötigt wird. Damit kann sowohl die Luftströmung gegenüber heutigen Anorderungen reduziert werden. Überdies kann man die gravimetrischen und volumetrischen Leistungsdichten bei gleichzeitiger Verringerung der Herstellungskosten erhöhen. Nicht zuletzt ist es möglich, keramikunverträgliche Thermospannungen zu vermeiden. Schließlich kann der Wirkungsgrad einer solchen Brennstoffzelle durch Verringerung des parasitären Leistungsbedarfes des Reaktionsluftgebläses über die Möglichkeit einer starken Verringerung des Luftumwälzbedarfes gesenkt werden.

## Patentansprüche

1. Brennstoffzelle umfassend zumindest eine Einzelzelle mit einer Elektrolyt-Elektroden-Einheit (12, 14) sowie zumindest einer leitfähigen End- oder Zwischenplatte (20, 24, 36), über die in zumindest einem Zufuhrbereich (16, 18) ein gasförmiger Reaktand zumindest einer Elektrode der Einzelzelle zuführbar ist, wobei die End- oder Zwischenplatte (20, 24, 36) derart ausgebildet ist, dass strömungsmäßig vor einem Zufuhrbereich (18) ein Wärmetauscherbereich ausgebildet ist (30, 34), in dem einer Anodenseite der Einzelzelle Wärme entzogen wird,
dass die End- oder Zwischenplatte (20, 24, 36) Luftführungskanäle oder Luftführungsbereiche (30) aufweist, derart, dass der gasförmige Reaktand unmittelbar an den Anodenräumen vorbeiströmt, um anschließend in den Kathoden-Zufuhrraum (18) eingebracht zu werden, wobei die End- oder Zwischenplatte (20, 24, 36) aus zumindest zwei Teilelementen (20, 24) zusammengesetzt ist und zwischen den zumindest zwei Teilelementen (20, 24) zumindest ein Abschnitt des Wärmetauschers (30, 34) gebildet ist, und dass die End- oder Zwischenplatte (20, 24, 36) ausgeführt ist, um im Wärmetauscherbereich zumindest eine Strömungsumkehr des gasförmigen Reaktanden zu erreichen, mittels einer eingebrachten Umlenkplatte (36), die im Wärmetauscherbereich zwei Strömungs-Teilbereiche (30 und 34) bildet, die nacheinander durchströmt werden.

2. Brennstoffzelle nach Anspruch 1,
**dadurch gekennzeichnet, dass** die einzelnen Teilelemente (20, 24) der End- oder Zwischenplatten Abstandselemente (22, 26) umfassen, so dass die einzelnen Teilelemente unter Ausbildung von Strömungsbereichen von der Anode und der Kathode der Einzelzelle oder der Einzelzellen und/oder voneinander beabstandet sind.

3. Brennstoffzelle nach Anspruch 2,
**dadurch gekennzeichnet, dass** die Abstandelemente (22, 26) in Form von Noppen gewählt sind.

4. Brennstoffzelle nach Anspruch 3,
**dadurch gekennzeichnet, dass** die Noppen durch Einprägen oder Aufbringen hergestellt sind.

5. Brennstoffzelle nach einem der vorhergehenden Ansprüche,
**dadurch gekennzeichnet, dass** die die Umlenkplatte (36) berührenden stirnseitigen Noppenflächen mit der Umlenkplatte (36) gut elektrische kontaktiert sind.

## Claims

1. A fuel cell comprising at least one individual cell with an electrolyte/electrode unit (12, 14) and at least one conductive end or intermediate plate (20, 24, 36), via which a gaseous reactant can be supplied to at least one electrode of the individual cell in at least one supply region (16, 18) wherein the end or intermediate plate (20, 24, 36) is formed in such a way that a heat exchanger region (30, 34) is formed in terms of flow prior to a supply region (18), in which heat exchanger region heat is removed from an anode side of the individual cell, in that the end or intermediate plate (20, 24, 36) has air guidance channels or air guidance regions (30), in such a way that the gaseous reactant flows directly past the anode chambers, in order to subsequently be introduced into the cathode supply chamber (18), the end or intermediate plate (20, 24, 36) being composed of at least two partial elements (20, 24) and at least one section of the heat exchanger (30, 34) being formed between the at least two partial elements (20, 24), and in that the end or intermediate plate (20, 24, 36) is designed to achieve at least one flow reversal of the gaseous reactant in the heat exchanger region, by means of an introduced deflector plate (36), which, in the heat exchanger region, forms two flow partial regions (30 and 34), through which flow occurs successively.

2. A fuel cell according to claim 1, **characterised in that** the individual partial elements (20, 24) of the end or intermediate plates comprise spacer elements (22, 26), so the individual partial elements are spaced apart from the anode and the cathode of the individual cell or the individual cells and/or from one another, forming flow regions.

3. A fuel cell according to claim 2, **characterised in that** the spacer elements (22, 26) are selected in the form of nubs.

4. A fuel cell according to claim 3, **characterised in that** the nubs are produced by embossing or application.

5. A fuel cell according to any one of the preceding claims, **characterised in that** the nub faces on the end face touching the deflector plate (36) are in good electrical contact with the deflector plate (36).

## Revendications

1. Pile à combustible comprenant au moins une cellule individuelle avec une unité électrodes-électrolyte (12, 14) et au moins une plaque d'extrémité ou une plaque intermédiaire conductrice (20, 24, 36) par laquelle peut être acheminé un gaz de réactance d'au moins une électrode de la cellule individuelle dans au moins une zone d'admission (16, 18), la plaque d'extrémité ou la plaque intermédiaire (20, 24, 36) étant formée de manière à avoir, dans le sens de l'écoulement, avant une zone d'admission (18), une zone de l'échangeur thermique (30, 34) dans laquelle de la chaleur est prélevée côté anodique de la cellule individuelle,
la plaque d'extrémité ou la plaque intermédiaire (20, 24, 36) présente des canaux de guidage d'air ou des zones de guidage d'air (30) de telle sorte que le gaz de réactance s'écoule directement au niveau des chambres anodiques pour être ensuite introduit dans la zone d'admission cathodique (18), la plaque d'extrémité ou la plaque intermédiaire (20, 24, 36) étant composée d'au moins deux éléments partiels (20, 24) et, entre au moins deux éléments partiels (20, 24) est formée au moins une section de l'échangeur thermique (30, 34), et la plaque d'extrémité ou la plaque intermédiaire (20, 24, 36) est réalisée pour obtenir au moins un écoulement inversé du gaz de réactance dans la zone de l'échangeur thermique au moyen d'une plaque de déflection (36) qui est appliquée et forme deux zones partielles d'écoulement (30 et 34) traversées l'une après l'autre dans la zone de l'échangeur thermique.

2. Pile à combustible selon la revendication 1,
**caractérisée en ce que**
les éléments partiels individuels (20, 24) des plaques d'extrémité ou des plaques intermédiaires comprennent des éléments d'écartement (22, 26) de sorte que les éléments partiels individuels sont distants de l'anode et de la cathode de la ou des cellule(s) individuelle(s) et/ou l'un de l'autre lors de la formation des zones d'écoulement.

3. Pile à combustible selon la revendication 2,
**caractérisée en ce que**
les éléments d'écartement (22, 26) sont choisis en forme de boucles.

4. Pile à combustible selon la revendication 3,
**caractérisée en ce que**
les boucles sont réalisées au moyen d'une gravure ou d'une application.

5. Pile à combustible selon l'une des revendications précédentes,
**caractérisée en ce que**
les surfaces frontales des boucles en contact avec la plaque de déflection (36) ont un bon contact électrique avec la plaque de déflection (36).
